# EUROPEAN PATENT APPLICATION

(11) **EP 4 814 789 A1**
(43) Date of publication of application: **30.09.2026**
(21) Application number: 25166618.6
(22) Date of filing: 27.03.2025
(51) Int. Cl.: G06N 3/045, G06N 3/092, G06N 3/0985

(54) **DEVICE AND METHOD FOR EFFICIENT INVERSE REINFORCEMENT LEARNING FOR AUTONOMOUS DRIVING**

(71) Applicant: Robert Bosch GmbH, 70442 Stuttgart (DE)
(72) Inventor: Geiger, Philipp, 76135 Karlsruhe (DE); Yao, Yu, 52134 Herzogenrath (DE); Miron, Yakov, 72070 Tuebingen (DE); Mathes, Juergen, 70567 Stuttgart-Moehringen (DE); Buerkle, Lutz, 70199 Stuttgart (DE); Paparusso, Luca, 70199 Stuttgart (DE); Scheel, Oliver, 70197 Stuttgart (DE); Moeser, Nicolas, 71272 Renningen (DE); Dolgov, Maxim, 71272 Renningen (DE); Mazzola, Markus, 72074 Tuebingen (DE)

(57) **Abstract**

A method for training a driving policy for autonomous vehicles, comprising: pretraining the driving policy in a first stage using one of the following techniques: i) Reinforcement Learning (RL) with a hand-crafted reward function, or ii) behavior cloning from expert demonstrations; storing intermediate results from the first stage, including: i) rollouts generated by the policy, and/or ii) model weights of the pre-trained policy; applying Inverse Reinforcement Learning (IRL), comprising: i) learning a reward model from expert demonstrations, and/or ii) fine-tuning the pre-trained policy from the first stage with RL under the learned reward model; characterized in that the stored intermediate results of the first stage are utilized during the secondary stage, comprising: i) using the stored rollouts to augment the expert demonstration dataset, and ii) reusing the stored model weights to initialize the policy and the reward model.

## Description

### Prior art

In autonomous driving, oftentimes, driving policies are trained via Reinforcement Learning (RL), which uses a reward function to incentivize the desired behavior. However, hand crafting an effective reward function can be challenging. Therefore, one often learns that reward function from data in a prior step via Inverse Reinforcement Learning (IRL) (see e.g. "DTPP: Differentiable Joint Conditional Prediction and Cost Evaluation for Tree Policy Planning in Autonomous Driving"). Often, the RL training (under the IRL reward function) is started from scratch, without prior training.

However, IRL can be expensive because it requires training a reward model which is separate from the driving policy. Aside from compute resources, this also requires data which often comes in the form of expert demonstrations, i.e. recordings of a human expert solving the problem. Such data is scarce and expensive to obtain.

### Advantages of the invention

The present invention improves the efficiency of Inverse Reinforcement Learning (IRL) in training driving policies for autonomous vehicles, specifically addressing the high computational cost and data requirements of traditional IRL. Instead of training a reward model and driving policy from scratch, this invention uses a multi-stage approach. First, a preliminary training stage pre-trains the driving policy either through reinforcement learning with a handcrafted reward function or through behavior cloning using expert demonstrations. Intermediate results, such as policy rollouts and model weights, are saved. In the second stage, IRL is applied. A reward model is learned from expert demonstrations, and then the pre-trained policy from the first stage is fine-tuned using reinforcement learning under this learned reward model. The stored intermediate results are leveraged: the saved rollouts augment the expert demonstration dataset and the pre-trained policy weights enable faster and more stable convergence during reinforcement learning, while its module weights (e.g. encoders) are reused by the reward model to save computation.

This invention increases the efficiency of Inverse Reinforcement Learning for autonomous driving by reducing computational requirements and leveraging existing data more effectively. It achieves this by reusing pre-trained policy weights, including modules like encoders, which lessens the computational burden on both the policy and reward model training. Furthermore, it augments the expert demonstration dataset with stored rollouts from the pre-training stage, reducing the reliance on large amounts of expensive expert data. Finally, initializing the reinforcement learning process with a pre-trained policy results in faster convergence during the fine-tuning stage, further improving efficiency. Thus, the invention reduces the overall compute and data requirements for IRL.

### Disclosure of the invention

In a first aspect, the invention is concerned with a computer-implemented method for training a driving policy for autonomous vehicles according to claim 1.

Embodiments of the invention will be discussed with reference to the following figures in more detail. The figures show:

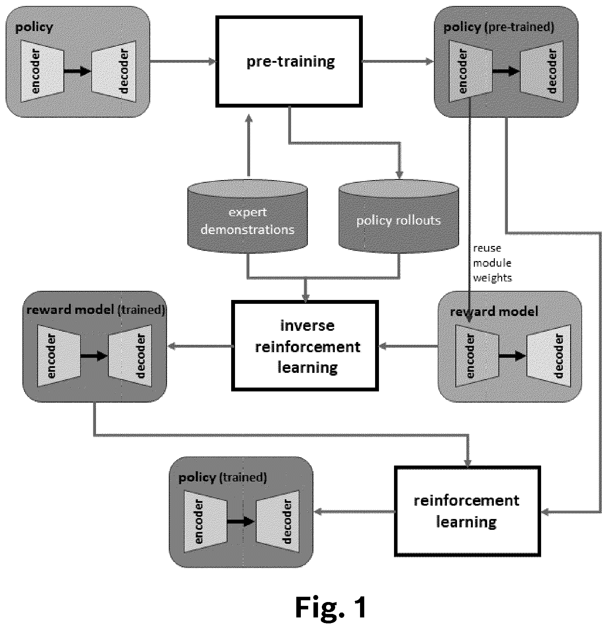

- Figure 1: a schematic diagram of an embodiment of the invention.

### Description of the embodiments

The invention described in the following pertains to the field of autonomous driving, specifically focusing on improving the efficiency of training driving policies using Reinforcement Learning (RL) and Inverse Reinforcement Learning (IRL). The primary challenge addressed by this invention is the high computational cost and data requirements associated with IRL, which involves training a reward model separate from the driving policy. This process typically requires expert demonstrations, which are both scarce and expensive to obtain.

A core idea of the invention is to enhance the efficiency of IRL by not starting the RL training from scratch. Instead, the invention proposes a multi-stage approach where the driving policy is pre-trained in a preliminary stage, and intermediate results such as rollouts generated by the policy are saved. These intermediate results are then utilized in the subsequent IRL setup, which involves learning the reward model and fine-tuning the pre-trained policy under the IRL reward function.

In a preferred embodiment, there could be a further stage that could be included in a multi-stage/curriculum learning approach. This is that additional to IRL which uses expert demonstrations data to fit the reward model, one could additionally use labelled preference data to train the reward model (similar to what RLHF for LLMs uses, see e.g. https://en.wikipedia.org/wiki/Reinforcement_learning_from_human_feedback). This preference data is not necessarily cheaper than the expert demonstrations (rather the opposite), but it can have higher information content. The multi-stage / curriculum approach could look like (1) train reward model from rollouts under a pre-defined reward function, (2) train reward model on expert demonstration data, (3) train reward model on preference label data. Also note that the individual stages may have to be trained simultaneously instead of subsequently, to avoid catastrophic forgetting.

The first stage of the multi-stage approach is referred to as preliminary stage. In the preliminary stage, the driving policy is pre-trained using one of two possible techniques (a) or (b):

### Technique (a): RL with a Hand-Crafted Reward Function

In this approach, a reward function is manually designed to incentivize desired behaviors in the driving policy. For example, the reward function might include components that reward the policy for maintaining a safe distance from other vehicles, staying within lane boundaries, and minimizing abrupt accelerations or decelerations. Although hand-crafting a reward function can be challenging, it often guides the policy in the right direction. During this RL training, the policy explores the environment and generates rollouts, which are sequences of state-action pairs that represent the policy's behavior over time. Successful rollouts, where the policy performs well according to the hand-crafted reward function, are stored as intermediate results. Preferably, one can just look at whether the policy training has converged to high/stable rewards.

### Technique (b): Behavior Cloning

Behavior cloning involves supervised learning from expert demonstrations. Expert demonstrations are recordings of a human driver solving the driving task. These demonstrations are used to train the policy to mimic the expert's behavior. For example, if the expert demonstration shows the driver navigating through traffic, the policy learns to replicate those actions in similar situations. During this stage, rollouts can be created with the pre-trained policy using e.g. rejection sampling, which involves generating multiple rollouts and selecting those that closely match the expert's behavior. These selected rollouts are stored as intermediate results. Preferably, one possibility for selection could be an adversarial approach where a neural network is trained to distinguish expert vs policy output. For rollouts where this network fails to classify correctly, it can be assumed that they are close to the expert behavior. Otherwise, one can use all the BC rollouts.

Preferably, during the preliminary stage, the following intermediate results are stored to expedite the next stage:
Exemplarily for Technique (a): Successful rollouts generated during policy exploration are stored. For example, if the policy successfully navigates a complex intersection without collisions, the sequence of actions taken during this rollout is saved. Exemplarily for Technique (b): Rollouts created with the pre-trained policy using rejection sampling are stored. For example, if the policy generates a rollout that closely matches the expert's demonstration of lane changing, this rollout is saved.

In addition, the weights of the policy can be stored. These weights represent the learned parameters of the policy, such as the neural network weights that effectively encode the policy's decision-making process.

The second stage of the multi-stage approach is referred to as secondary stage. In the secondary stage, IRL is employed, which includes:
The secondary stage starts with step 1: Learning a Reward Model from Expert Demonstrations. The reward model is trained using expert demonstrations to learn the underlying reward function that the expert is optimizing. For example, the expert demonstrations might show the driver prioritizing safety and comfort, and the reward model learns to assign higher rewards to actions that align with these priorities. The question of whether a learned reward model correctly learned the underlying expert preferences/priorities, is often judged in some way by seeing if the expert demonstrations are optimal under that reward model (i.e., expert policy is better than possible other policies). This step involves training a separate model to predict the reward for each state-action pair based on the expert demonstrations. It is noted that predicting the reward can be based on a function of state and action but can alternatively just based on a state or alternatively based on state, action and next state.

After step1, it follows step 2, which comprises a fine-tuning of the Pre-Trained Policy with RL under the Learned Reward Model of step 1. The pre-trained policy from the preliminary stage is fine-tuned using RL under the learned reward model. This involves using the reward model to provide feedback to the policy during training, guiding it to optimize the learned reward function. For example, the policy might be fine-tuned to improve its lane-keeping behavior based on the rewards assigned by the learned reward model.

In preferred embodiments of the invention, the intermediate results of the first stage of the multi-stage approach are leveraged as follows.

The stored rollouts can be filtered and used to augment the expert demonstration dataset. For example, rollouts that exhibit successful navigation through intersections can be added to the expert demonstration dataset, providing additional examples for training the reward model. The criterion of a successful navigation can be hard constraints, e.g. specifiable by hand, e.g., whether no collision appeared, no offroad, and whether the target is reach in timely fashion. Other things are harder, like subtle trade-offs in negotiation with other traffic participants. For these subtle trade-offs one can learn the reward model via IRL.

Starting from a pre-trained policy ensures that the RL training is more stable and converges more quickly. For example, the pre-trained policy already has a basic understanding of driving behaviors, so the fine-tuning process focuses on refining these behaviors rather than learning from scratch. Additionally, the pre-trained policy contains modules such as encoders for input features, and the weights for these modules can be reused by the reward model. This reuse of weights saves computational resources during IRL, as the reward model does not need to learn useful input features from scratch. For example, if the encoder module has already learned to extract relevant features from sensor data, these learned features can be directly used by the reward model.

The advantage of this multi-stage approach is given by significantly reducing the compute requirements for the reward model and increases the usable data for training the reward model, thereby enhancing the overall efficiency of IRL in autonomous driving.

Figure 1 provides a schematic drawing of the procedure above, illustrating the flow of the multi-stage approach and the utilization of intermediate results to improve the efficiency of the IRL process.

The diagram illustrates the improved IRL process for training autonomous driving policies, visually depicting the flow of data and key operations across two distinct stages. Starting with Stage 1, Pre-training, we see the initial "policy" represented as a block, symbolizing the untrained neural network that will eventually control the vehicle's actions. An arrow leads to the "pre-training" block, representing the process of training this initial policy. This pre-training can be achieved via two methods, implicitly represented in the diagram. If using behavior cloning, the "expert demonstrations" box shows that data from expert human drivers is used as input for supervised training. Alternatively, if using reinforcement learning with a handcrafted reward, this data box is not involved, signifying that the policy learns through trial and error based on a simpler, predefined reward.

The output of the pre-training stage is a "policy (pre-trained)" block, now representing the trained initial policy. Significantly, this stage also generates "policy rollouts," indicated by a branching arrow. These rollouts are sequences of actions and states experienced by the car during training, capturing valuable interaction data. These rollouts, along with the trained policy itself, become crucial inputs for the next stage.

Moving to Stage 2, Inverse Reinforcement Learning and Fine-tuning, we see the "policy (pre-trained)" and "policy rollouts" feeding into the "inverse reinforcement learning" block. This block represents the process of learning a reward function from expert demonstrations, now enhanced by the data from the pre-training stage. Within this block, the diagram explicitly highlights the "reuse module weights" step. This refers to the transfer of learned weights from specific modules within the pre-trained policy, such as the convolutional neural network layers used for processing camera images (feature encoders), to the reward model. This weight transfer initializes the reward model with valuable feature representations, accelerating its training and reducing computational cost.

The output of the inverse reinforcement learning block is the "reward model," representing the learned function that quantifies desirable driving behavior. This reward model then feeds into the final "reinforcement learning" block, where the "policy (pre-trained)" is further refined. This final RL stage uses the learned reward model to fine-tune the initial policy, leveraging its existing knowledge and leading to faster convergence compared to training from scratch. The output of this stage is the "policy (trained)" block, representing the fully trained, optimized driving policy ready for deployment in an autonomous vehicle. The diagram effectively visualizes how pre-training and strategic data reuse significantly enhance the efficiency of the entire IRL process.

Preferably, the policies comprise an encoder/decoder architecture.

## Claims

1. A computer-implemented method for training a driving policy for autonomous vehicles, comprising:
a. Pre-training the driving policy in a first stage using one of the following techniques:
i. Reinforcement Learning (RL) with a hand-crafted reward function, or
ii. Behavior cloning from expert demonstrations;
b. Storing intermediate results from the first stage, including:
i. Rollouts generated by the policy, and/or
ii. Model weights of the pre-trained policy;
c. Applying Inverse Reinforcement Learning (IRL), comprising:
i. Learning a reward model from expert demonstrations, and/or
ii. Fine-tuning the pre-trained policy from the first stage with RL under the learned reward model;
**characterized in that** the stored intermediate results of the first stage are utilized during the secondary stage, comprising:
d.
i. Using the stored rollouts to augment the expert demonstration dataset, and
ii. Reusing the stored model weights to initialize the policy and the reward model.

2. The method of claim 1, wherein the hand-crafted reward function in step a.i. includes components that reward the policy for maintaining a predefined safe distance from other vehicles, staying within predefined lane boundaries, and minimizing predefined abrupt accelerations or decelerations.

3. The method according to any of the preceding claims, wherein the behavior cloning in step a.ii. involves supervised learning from expert demonstrations that include recordings of a human driver solving the driving task.

4. The method according to any of the preceding claims, wherein the rollouts stored in step b.i. are sequences of state-action pairs representing the policy's behavior over time.

5. The method according to any of the preceding claims, wherein the rollouts stored in step b.i. are generated using rejection sampling to select those that closely match the expert's behavior.

6. The method according to any of the preceding claims, wherein the stored rollouts used in step b.i. are filtered to select those actions that exhibit a predefined successful navigation behavior.

7. The method according to any of the preceding claims, wherein the stored model weights reused in step d.ii., in particular weights for modules of encoders for input features.

8. Method according to any of the preceding claims, wherein the input of the policy are sensor signals, in particular images or LIDAR or RADAR signals, wherein the output signals of the policy are control commands for the vehicle.

9. Method according to claim 8, wherein the output signals of the policy are used for providing an actuator control signal for controlling an actuator of the vehicle, or wherein the policy is applied to control the vehicle.

10. Computer program that is configured to cause a computer to carry out the method according to any one of claims 1 to 9 with all of its steps if the computer program is carried out by a processor.

11. Machine-readable storage medium on which the computer program according to claim 10 is stored.

12. System that is configured to carry out the method according to any one of claims 1 to 9.
